# FASCICULE DE BREVET EUROPEEN

(11) **EP 2 825 395 B1**
(45) Date de publication et mention de la délivrance du brevet: **20.01.2021**
(21) Numéro de dépôt: 13715285.6
(22) Date de dépôt: 08.03.2013
(51) Int. Cl.: B43K 25/02, B43K 7/00

(54) **STRUCTURE DE MONTAGE D'UNE AGRAFE POUR UN INSTRUMENT D'ECRITURE**
STRUKTUR ZUR MONTAGE EINER KLAMMER FÜR EINE SCHREIBVORRICHTUNG
STRUCTURE FOR MOUNTING A CLIP FOR A WRITING IMPLEMENT

(30) Priorité: 16.03.2012 FR 1252405
(43) Date de publication de la demande: 21.01.2015
(73) Titulaire: Société BIC, 92110 Clichy (FR)
(72) Inventeur: ROLION, Franck, F-95270 Asnieres Sur Oise (FR); FAGU, Ludovic, F-93130 Noisy Le Sec (FR)
(74) Mandataire: Plasseraud IP
(86) Numéro de dépôt international: PCT/FR2013/050492
(87) Numéro de publication internationale: WO 2013/136000

(56) Documents cités:
- DE-U1- 9 004 577
- US-A- 5 336 006
- US-A- 5 535 487
- US-A1- 2004 099 777
- US-A1- 2006 053 595
- US-B1- 6 308 380

## Description

La présente invention se rapporte de manière générale à une structure de montage d'une agrafe pour un instrument d'écriture comprenant une agrafe pivotante qui comprend une partie d'accrochage fixe qui s'étend selon un axe de référence, un corps principal pivotant dans un plan de pivotement qui contient ledit axe de référence, ledit corps principal présentant deux flancs qui comprennent chacun un crochet limiteur de pivotement, et une partie courbée élastiquement déformable reliant le corps principal à la partie d'accrochage, l'instrument d'écriture comprenant en outre un organe récepteur adapté pour recevoir ladite partie d'accrochage de l'agrafe, ledit organe récepteur comprenant au moins une butée de pivotement apte à coopérer avec un dit crochet limiteur de pivotement afin de limiter le pivotement du corps principal de l'agrafe.

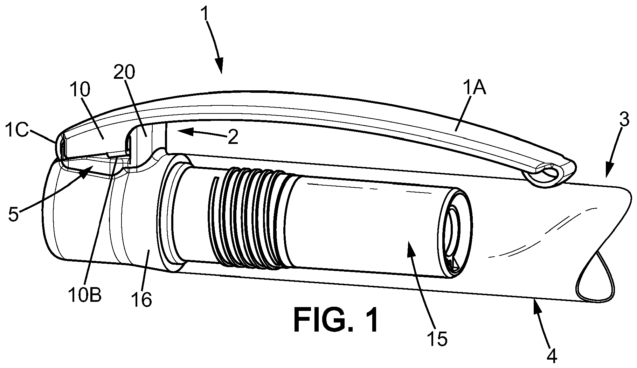

Une telle structure de montage est connue notamment de la publication du brevet français N° 947066, qui divulgue une structure de montage d'une agrafe communément appelée « clip » sur un organe récepteur constitué par une partie de la paroi d'un capuchon. Dans un premier mode de réalisation de la structure (figures 1 à 3), la paroi du capuchon présente une ouverture pour y introduire les deux flancs du corps principal ainsi que la partie d'accrochage qui prolonge la partie courbée flexible du clip. De cette façon, la partie d'accrochage du clip vient en appui permanent contre la surface intérieure de la paroi, et un bord de l'ouverture forme une butée pour les crochets limiteurs de pivotement du clip.

Ce dispositif présente toutefois des inconvénients. En particulier, le montage du clip sur l'organe récepteur est rendu difficile notamment par la nécessité de maintenir en flexion la partie flexible d'accrochage du clip en l'écartant du corps principal du clip pendant le montage. De plus, il est difficile en pratique d'introduire les deux flancs du clip dans l'ouverture à cause des crochets limiteurs de pivotement qui doivent passer sous la paroi du capuchon. D'autre part, une fois le montage effectué, la partie d'accrochage du clip est en simple appui contre la paroi du capuchon et n'est pas particulièrement empêchée de bouger sur cette paroi, ce qui peut poser des problèmes de stabilité de ladite partie d'accrochage lors de l'utilisation du clip. Il est d'ailleurs indiqué dans le document qu'un objectif de la structure est de faciliter notamment le démontage du clip (lignes 69-71). Cet objectif ne conduit manifestement pas à un montage stable du clip.

On connaît aussi une structure de montage, avec une agrafe qui correspond au préambule de la revendication 1, dans le document US 5336006. La stabilité de montage d'une telle agrafe n'est pas l'objectif de ce document, l'agrafe étant montée pivotante entre deux positions et prévue pour un actionnement.

La présente invention vise à résoudre ces inconvénients. Pour ceci, l'invention vise en particulier à procurer une agrafe et une structure de montage d'une agrafe qui permette un montage stable et facile de l'agrafe.

L'invention a ainsi pour objet une agrafe pour instrument d'écriture, telle que définie dans la revendication 1.

L'invention a en outre pour objet une structure de montage d'une agrafe pour instrument d'écriture, cette structure étant telle que définie dans la revendication 4.

Grâce à ces dispositions, le montage est rendu stable en particulier grâce au maintien latéral du corps principal de l'agrafe procuré par les deux butées latérales de l'organe de butée. De plus, ces dispositions permettent de faciliter le montage par rapport à un dispositif tel que celui divulgué par le brevet français N° 947066 susmentionné.

Dans des modes de réalisation préférés d'une structure de montage d'une agrafe selon l'invention, on a recours notamment à l'une ou l'autre des dispositions suivantes éventuellement prises en combinaison :
lesdites deux butées latérales sont formées par deux surfaces latérales de ladite partie de butée situées de part et d'autre du plan de pivotement, et deux dites butées de pivotement sont formées chacune par une surface qui progresse vers le plan de pivotement depuis un bord d'une dite surface latérale ; ce qui permet de réaliser facilement par moulage les butées latérales et les butées de pivotement ;
au moins lesdits flancs de l'agrafe sont formés à partir d'une tôle métallique et chaque crochet limiteur de pivotement est formé par une languette de ladite tôle métallique recourbée au niveau d'un bord d'un flanc pour faire saillie en direction du plan de pivotement ; ce qui permet de réaliser facilement des crochets solides pouvant avoir une relativement large surface de contact de butée et permet également des flancs de l'agrafe ayant une relativement faible hauteur ;
ledit organe récepteur comprend une base comprenant deux parois latérales et une paroi supérieure qui relie entre elles les deux parois latérales, ledit organe récepteur comprenant en outre un orifice de maintien formé entre les deux parois latérales et dans lequel ladite partie d'accrochage de l'agrafe est engagée et immobilisée ; ce qui facilite le montage et le maintien de l'agrafe ;
ladite paroi supérieure de la base comprend une partie transversale de renfort au niveau d'une entrée dudit orifice de maintien, ladite partie transversale de renfort présentant deux faces latérales qui définissent une largeur inférieure à une largeur dudit organe de butée et sensiblement égale à une distance séparant deux dits crochets limiteurs de pivotement ; ce qui renforce la solidité de la base sans compromettre la facilité du montage de l'agrafe ;
ladite paroi supérieure comprend des bossages faisant saillie vers l'intérieur de l'orifice de maintien, lesdits bossages étant en contact avec une face de la partie d'accrochage de l'agrafe de façon à empêcher un déplacement de ladite partie d'accrochage selon le plan de pivotement ; ce qui renforce la stabilité de la partie d'accrochage de l'agrafe dans l'orifice de maintien selon le plan de pivotement ;
la partie d'accrochage de l'agrafe comprend l'organe flexible d'encliquetage et l'organe récepteur comprend un orifice d'encliquetage adjacent audit orifice de maintien et dans lequel ledit organe flexible d'encliquetage est engagé ; ce qui renforce la stabilité de la partie d'accrochage de l'agrafe dans l'orifice de maintien selon l'axe de référence et empêche un démontage de l'agrafe ;
ledit organe récepteur comprend une paroi frontale de renfort qui s'étend sensiblement perpendiculairement audit axe de référence, ladite au moins une butée de pivotement faisant saillie à partir d'une face arrière de ladite paroi frontale de renfort ; ce qui renforce la solidité de chaque butée de pivotement ;
ladite paroi frontale de renfort comprend une partie saillante supérieure formant une butée contre laquelle une surface inférieure du corps principal de l'agrafe vient en contact quand l'agrafe n'est pas sollicitée ; ce qui permet d'éviter un appui des crochets limiteurs de pivotement sur l'organe récepteur si une pression dirigée vers l'organe récepteur est exercée sur l'agrafe ;
La structure de montage d'une agrafe est utilisable dans un instrument d'écriture comprenant un fût s'étendant selon un axe longitudinal, dans lequel l'organe récepteur de la structure de montage est intégralement formé avec un organe généralement tubulaire monté à l'arrière du fût et s'étendant selon ledit axe longitudinal, ledit organe généralement tubulaire comprenant une partie arrière généralement cylindrique sur laquelle ledit organe récepteur fait saillie, ladite partie arrière comprenant une portion de paroi qui présente une surface extérieure contre laquelle la partie d'accrochage de l'agrafe vient en contact ; ce qui permet un montage aisé de l'agrafe sur l'organe récepteur sans empiéter sur un espace intérieur de l'organe généralement tubulaire.

D'autres caractéristiques et avantages ressortent de la description qui va suivre d'exemples non limitatifs de modes de réalisation, en référence aux figures dans lesquelles :
La FIG. 1 représente une vue en perspective de côté d'une structure de montage selon un premier mode de réalisation de l'invention, la structure de montage étant installée à l'arrière d'un fût d'un instrument d'écriture.
La FIG. 2 représente une vue en perspective de dessous de l'agrafe de la structure de montage de la FIG. 1.
La FIG. 3 représente une vue partielle de côté de l'agrafe de la FIG. 2.
La FIG. 4 représente une vue de dessous partielle de l'agrafe de la FIG. 2.
La FIG. 5 représente une vue en perspective de l'organe récepteur de la structure de montage de la FIG. 1, ledit organe récepteur étant intégralement formé avec un organe tubulaire destiné à être monté à l'arrière d'un fût.
La FIG. 6 représente une vue de dessus partielle de l'organe récepteur de la FIG. 5.
La FIG. 7 représente une vue partielle en coupe longitudinale de la structure de montage du premier mode de réalisation selon l'invention, la coupe étant effectuée selon le plan de pivotement de l'agrafe.
La FIG. 8 représente une vue en coupe transversale de la structure de montage de la FIG. 7, selon le plan de coupe VIII-VIII représenté sur la FIG. 7.
La FIG. 9 représente une vue partielle en perspective arrachée de la structure de montage de la FIG. 7, vue vers l'avant à partir du plan de coupe IX-IX représenté sur la FIG. 7.
La FIG. 10 représente une autre vue partielle en perspective arrachée de la structure de montage de la FIG. 7, vue vers l'arrière à partir du plan de coupe X-X représenté sur la FIG. 7.
La FIG. 11 représente une vue partielle de côté de la structure de montage de la FIG. 7.

Selon un premier mode de réalisation d'une structure de montage selon l'invention, la structure de montage représentée sur la FIG. 1 comprend un organe récepteur 2 intégralement formé avec un organe généralement tubulaire 15. L'organe généralement tubulaire 15 est adapté pour être monté à l'arrière d'un fût 4 d'un instrument d'écriture 3, comme représenté également sur la FIG. 1. L'organe généralement tubulaire 15 comprend une partie arrière 16 généralement cylindrique, positionnée à l'arrière du fût 4 dans le prolongement de ce dernier une fois l'organe 15 monté sur le fût. L'organe récepteur 2 fait saillie radialement sur la partie arrière 16.

L'agrafe 1 comprend un corps principal 1A et une partie courbée 1C élastiquement déformable reliant le corps principal 1A à une partie d'accrochage insérée dans une base 5 de l'organe récepteur 2. L'organe récepteur 2 comprend un organe de butée 20 ayant au moins une butée de pivotement apte à coopérer avec un crochet limiteur de pivotement 10B prévu sur un flanc 10 de l'agrafe 1 afin de limiter le pivotement du corps principal 1A.

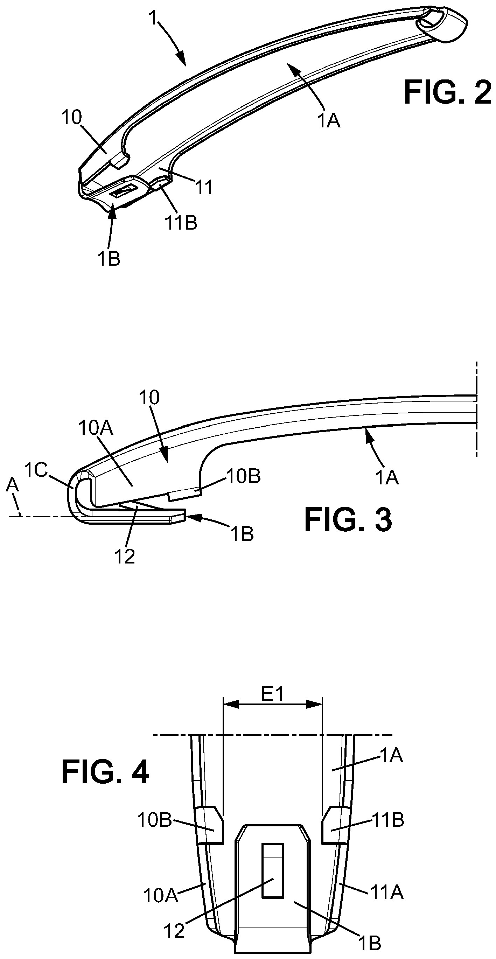

Comme représenté plus en détail sur les FIG. 2, FIG. 3 et FIG. 4, la partie d'accrochage 1B de l'agrafe 1 s'étend selon un axe de référence A. Le corps principal 1A de l'agrafe présente deux flancs 10 et 11, et la partie courbée 1C élastiquement déformable de l'agrafe a une fonction de pivot à rappel élastique permettant au corps principal 1A de pivoter par rapport à la partie d'accrochage 1B. Chaque flanc 10, 11, comprend un crochet limiteur de pivotement 10B, 11B. Au moins les flancs 10 et 11 de l'agrafe sont formés à partir d'une tôle métallique, et chaque crochet limiteur de pivotement est formé par une languette de cette tôle métallique qui est recourbée au niveau d'un bord d'un flanc pour faire saillie en direction de l'autre crochet limiteur de pivotement. Une distance E1 supérieure à la largeur de la partie d'accrochage 1B est prévue entre les deux crochets limiteurs de pivotement 10B et 11B.

Avantageusement, le corps principal 1A, la partie d'accrochage 1B, et la partie courbée 1C de l'agrafe sont formés à partir d'une même tôle métallique d'épaisseur uniforme, cette tôle étant déformable élastiquement dans une certaine mesure en particulier au niveau de la partie courbée 1C de l'agrafe. L'agrafe d'une structure de montage selon l'invention n'est toutefois pas limitée à cette réalisation.

Les deux crochets limiteurs de pivotement 10B et 11B s'étendent selon un même plan sensiblement perpendiculaire à une partie plane 10A, 11A, de chaque flanc 10, 11 (FIG. 2). Cette disposition présente notamment l'avantage de limiter la hauteur des crochets, c'est-à-dire leur encombrement dans la direction perpendiculaire à l'axe de référence A de la partie d'accrochage 1B, et permet par conséquent de limiter la hauteur de l'agrafe. Le plan des crochets est parallèle aux bords inférieurs des parties planes 10A et 11A des flancs, et présente une inclinaison comprise entre 5° et 15° par rapport à l'axe de référence A. Néanmoins, une inclinaison nulle ou quasiment nulle est envisageable.

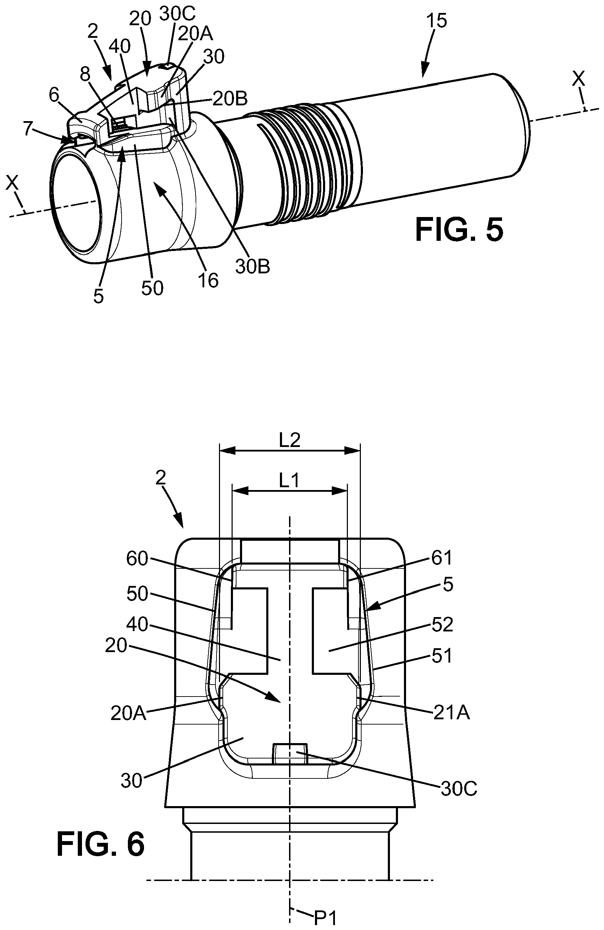

L'agrafe comprend avantageusement un organe flexible d'encliquetage 12, formé par une languette de tôle métallique découpée dans la partie d'accrochage 1B et courbée de façon à faire saillie vers le corps principal 1A. La languette 12 est inclinée par rapport à l'axe de référence A de façon à ce que lorsque la partie d'accrochage 1B de l'agrafe est introduite dans un orifice de maintien approprié 7 (FIG. 4) prévu dans l'organe récepteur 2, la languette fléchit en glissant en appui contre une paroi de l'orifice de maintien jusqu'à se relâcher dans un orifice d'encliquetage 8 où elle retrouve son inclinaison initiale pour servir d'élément de butée, comme expliqué plus loin en référence à la FIG. 6.

L'organe flexible d'encliquetage 12 n'est toutefois pas indispensable dans une structure de montage selon l'invention. On peut en effet se passer d'un tel organe flexible et prévoir en alternative des découpes en dents de scie sur les bords latéraux de la partie d'accrochage 1B de l'agrafe, afin d'immobiliser ladite partie d'accrochage selon la direction de l'axe de référence A dans l'orifice de maintien prévu dans l'organe récepteur 2.

Comme représenté sur la FIG. 4 et la FIG. 5, l'organe récepteur 2 de la structure de montage est intégralement formé avec un organe généralement tubulaire 15 destiné à être monté à l'arrière du fût 4 d'un instrument d'écriture 3 (FIG. 1). L'organe généralement tubulaire 15 s'étend selon un axe longitudinal X qui coïncide avec l'axe longitudinal du fût 4 de l'instrument d'écriture une fois l'organe 15 monté sur le fût. L'organe récepteur 2 comprend un organe de butée 20 ayant deux butées de pivotement latéralement opposées et aptes à coopérer chacune avec un crochet limiteur de pivotement 10B ou 11B afin de limiter le pivotement du corps principal 1A de l'agrafe. Une première butée de pivotement 20B, située sur le côté droit de l'organe de butée 20 en regardant vers l'avant de l'organe tubulaire 15, est visible sur la FIG. 4. La structure de montage est symétrique par rapport à un plan longitudinal P1 (FIG. 4) qui passe par l'axe longitudinal X de l'organe tubulaire 15. Comme détaillé plus loin, le plan longitudinal P1 constitue un plan de pivotement pour le corps principal 1A de l'agrafe. L'organe de butée 20 comprend en outre deux butées latérales 20A et 21A adaptées pour empêcher un déplacement du corps principal 1A perpendiculairement à son plan de pivotement P1.

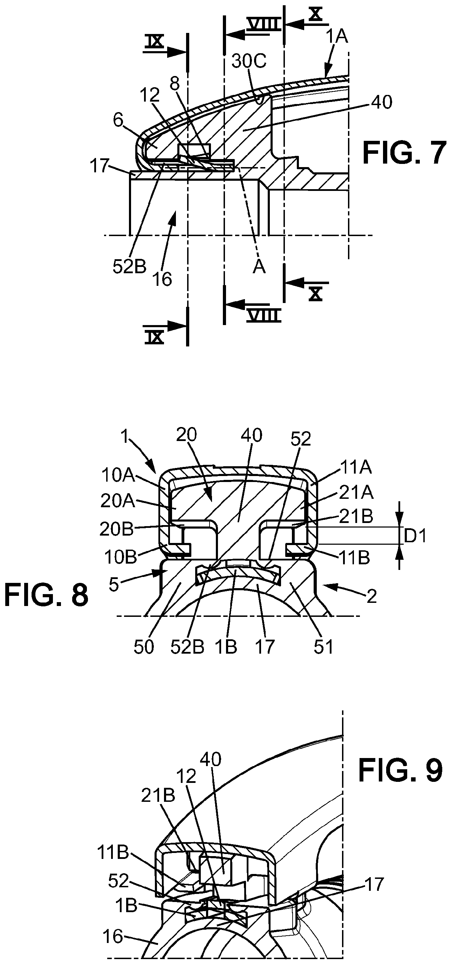

Chaque butée latérale 20A, 21A, est formée par une surface latérale de l'organe de butée 20, et chaque butée de pivotement est formée par une surface qui progresse vers le plan longitudinal P1 depuis un bord d'une dite surface latérale. Une deuxième butée de pivotement 21B, située sur le côté gauche de l'organe de butée 20 et symétrique avec la première butée de pivotement 20B par rapport au plan longitudinal P1, est visible sur la FIG. 7. Dans le présent mode de réalisation où les deux crochets limiteurs de pivotement 10B et 11B de l'agrafe s'étendent selon un même plan, les deux surfaces formant les butées de pivotement 20B et 21B s'étendent préférablement également selon un même plan de façon à ce que la surface de contact en butée entre les crochets et les butées de pivotement soit optimisée.

Le plan des butées de pivotement est avantageusement incliné par rapport à l'axe de référence A, avec une inclinaison prévue de façon à ce que le plan le plan des crochets coïncide avec le plan des butées lorsque les crochets viennent en butée, ce qui permet un contact bien à plat entre chaque crochet et la butée de pivotement correspondante. Une relativement grande surface de contact en butée permet en effet de ne pas risquer une déformation locale d'une butée de pivotement ou d'un crochet dans le cadre d'une utilisation normale de l'agrafe. En particulier, si l'organe récepteur 2 est réalisé en matière plastique, la structure susmentionnée des crochets limiteurs de pivotement est très avantageuse pour ne pas ne pas risquer de déformer les butées de pivotement.

L'organe récepteur 2 comprend de plus une paroi longitudinale médiane 40 s'étendant selon le plan longitudinal P1, et une paroi frontale de renfort 30 qui renforce la tenue mécanique de l'organe de butée 20 et s'étend sensiblement perpendiculairement à l'axe longitudinal X de l'organe généralement tubulaire 15. La paroi frontale 30 présente une face arrière 30B. Une butée de pivotement 20B, 21B, et la butée latérale 20A, 21A, du même côté de l'organe de butée 20, sont formées par une même partie protubérante de l'organe de butée 20 qui fait saillie longitudinalement vers l'arrière à partir de la face arrière 30B de la paroi frontale 30 et fait saillie latéralement vers l'extérieur à partir de la paroi longitudinale médiane 40.

L'organe récepteur 2 comprend également une base 5 comprenant deux parois latérales 50 et 51 symétriques entre elles par rapport au plan longitudinal P1, ladite base comprenant en outre une paroi supérieure 52 qui relie les deux parois latérales entre elles (FIG. 5). Un orifice de maintien 7 est formé entre les deux parois latérales, dans lequel la partie d'accrochage 1B de l'agrafe est prévue pour être engagée et immobilisée, et qui présente une entrée au niveau d'une extrémité arrière de l'organe récepteur 2. La paroi supérieure 52 comprend une partie transversale de renfort 6 au niveau de l'entrée de l'orifice de maintien 7, présentant deux faces latérales 60 et 61 symétriques entre elles par rapport au plan longitudinal P1 et qui définissent une largeur L1 de la partie transversale 6. Cette largeur L1 est inférieure à une largeur L2 définie entre les butées latérales 20A et 21A de l'organe de butée, et est sensiblement égale à la distance E1 séparant les deux crochets de l'agrafe (FIG. 3).

On notera en référence à la FIG. 3 que chaque crochet limiteur de pivotement 10B, 11B, présente avantageusement à l'avant un biseau, de façon à faciliter l'insertion de l'agrafe et son centrage par rapport au plan longitudinal P1. La distance E1 séparant les deux crochets 10B et 11B peut être strictement égale à la largeur L1 de la partie transversale 6, voire quelque peu inférieure à cette largeur L1 dès lors que la déformation élastique de la tôle métallique formant les flancs 10 et 11 de l'agrafe permet aux deux crochets d'être légèrement écartés lors du montage de l'agrafe pour passer la partie transversale 6. Par ailleurs, la paroi frontale de renfort 30 comprend une partie saillante supérieure 30C formant une butée (FIG. 4, FIG. 5). Comme visible sur la FIG. 6, une surface inférieure du corps principal 1A de l'agrafe vient en contact contre cette butée 30C quand l'agrafe n'est pas sollicitée.

Les figures 6 à 10 représentent plusieurs vues du premier mode de réalisation de la structure de montage dans une même position de repos de l'agrafe, c'est à dire quand l'agrafe n'est pas sollicitée, et sont commentées conjointement dans ce qui suit. L'orifice de maintien 7 est formé dans l'organe récepteur 2 de telle façon que l'axe de référence A de la partie d'accrochage 1B de l'agrafe soit sensiblement parallèle à l'axe longitudinal X de l'organe généralement tubulaire 15 (FIG. 6). Néanmoins, un orifice 7 adapté pour un axe de référence A incliné par rapport à l'axe longitudinal est envisageable. L'orifice d'encliquetage 8 est adjacent à l'orifice de maintien 7 de façon à recevoir l'organe flexible d'encliquetage 12 de l'agrafe, et est ouvert latéralement des deux côtés si bien qu'il forme un trou traversant la paroi longitudinale médiane 40 (FIG. 4, FIG. 6), ce qui permet de démouler l'orifice d'encliquetage 8 en utilisant deux demi-coquilles symétriques par rapport au plan longitudinal et servant au moulage de l'organe récepteur 2 avec l'organe généralement tubulaire 15.

La paroi supérieure 52 de la base 5 de l'organe récepteur 2 présente avantageusement sur le dessus deux parties plates perpendiculaires à la paroi longitudinale médiane 40 de part et d'autre de celle-ci (FIG. 4, FIG. 7), ce qui permet le démoulage par deux demi-coquilles symétriques comme indiqué ci-dessus. La paroi supérieure 52 comprend sur le dessous des bossages 52B qui font saillie vers l'intérieur de l'orifice de maintien 7 (FIG. 6, FIG. 7, FIG. 8). Les bossages 52B sont prévus pour être en contact avec la face de la partie d'accrochage 1B de l'agrafe radialement extérieure relativement à l'axe longitudinal, de façon à immobiliser la partie d'accrochage 1B dans la direction radiale, c'est-à-dire pour empêcher un déplacement de ladite partie d'accrochage selon le plan de pivotement du corps principal 1A de l'agrafe. Les bossages 52B se présentent avantageusement sous la forme de deux nervures longitudinales arrondies et symétriques entre elles par rapport au plan longitudinal, de part et d'autre de l'orifice d'encliquetage 8, ce qui facilite le démoulage de l'orifice de maintien 7, par exemple à l'aide d'une seule broche que l'on retire vers l'arrière parallèlement à l'axe longitudinal.

La partie arrière 16 généralement cylindrique sur laquelle l'organe récepteur 2 fait saillie comprend une portion de paroi 17 qui présente une surface radialement extérieure par exemple cylindrique contre laquelle la partie d'accrochage 1B de l'agrafe vient en contact (FIG. 6, FIG. 7, FIG. 8). La partie d'accrochage 1B est avantageusement courbée de façon à former une portion de tôle cylindrique dont la surface radialement intérieure vient complètement en contact avec la surface cylindrique radialement extérieure de la portion de paroi 17, ce qui permet de disposer les nervures longitudinales 52B rapprochées autant que possibles de l'axe longitudinal. Compte tenu notamment des tolérances de fabrication, la distance radiale entre une nervure longitudinale 52B et la portion de paroi 17 peut être prévue légèrement inférieure à l'épaisseur de la tôle de la partie d'accrochage 1B, de façon à être certain de maintenir la partie d'accrochage 1B sans jeu radial dans l'orifice de maintien 7. A cet effet, une légère déformation élastique de la paroi supérieure 52 au niveau des nervures longitudinales 52B peut être prévue dans la direction radiale une fois l'agrafe installée, d'autant plus que la paroi supérieure 52 est avantageusement relativement fine à ce niveau par souci de compacité radiale.

Avantageusement, l'épaisseur de la portion de paroi 17 dans la direction radiale est inférieure à l'épaisseur de paroi de la partie arrière 16 afin de rapprocher radialement de l'axe longitudinal l'orifice de maintien 7, ce qui permet de diminuer l'encombrement de la structure de montage dans la direction radiale sans compromettre l'espace intérieur de la partie arrière 16. Les deux parois latérales 50 et 51 de la base 5 présentent chacune une surface extérieure plane qui s'étend sensiblement dans le même plan qu'une partie plane 10A ou 11A d'un flanc 10 ou 11 du même côté latéral de l'agrafe, ce qui est avantageux au moins pour l'esthétique de la structure de montage.

Comme représenté sur la FIG. 7, quand l'agrafe n'est pas sollicitée, un espacement D1 est prévu entre chaque crochet limiteur de pivotement 10B, 11B, et la butée de pivotement correspondante 20B, 21B. Grâce à cet espacement D1, le corps principal 1A de l'agrafe peut être écarté du fût par l'utilisateur sans déformation du corps jusqu'à la mise en butée des crochets 10B et 11B.

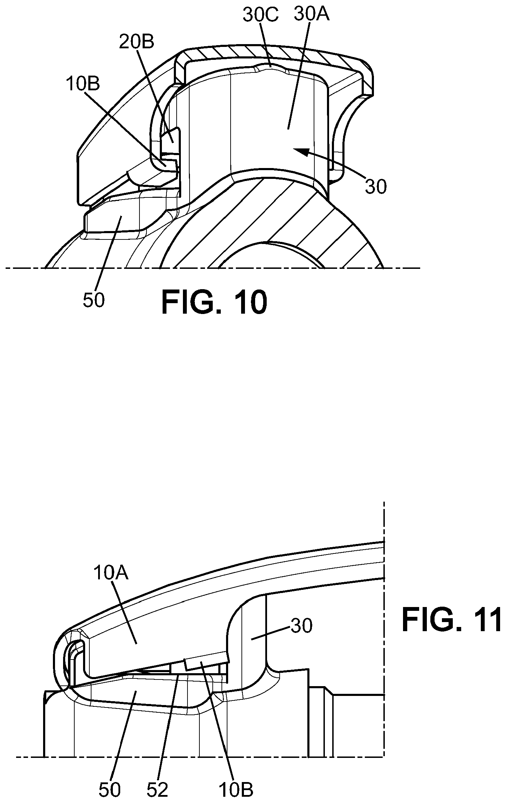

Comme représenté sur la FIG. 9 et la FIG. 10, et compte tenu de la symétrie de la structure de montage, chaque crochet limiteur de pivotement 10B, 11B, de même que chaque flanc 10A, 11A, de l'agrafe, est quasiment en contact avec la paroi supérieure 52 de la base de l'organe récepteur quand l'agrafe n'est pas sollicitée. Comme mentionné précédemment, la paroi frontale de renfort 30 de l'organe récepteur comprend une partie saillante supérieure 30C formant une butée contre laquelle une surface inférieure du corps principal 1A de l'agrafe vient en contact quand l'agrafe n'est pas sollicitée. Cette butée 30C permet de ne pas avoir d'appui d'un flanc 10 ou 11 de l'agrafe contre la paroi supérieure 52, même si l'agrafe est pressée contre le fût, et donc de ne pas risquer de déformer la paroi supérieure 52 en particulier au niveau d'un coin inférieur d'un crochet 10B ou 11B de l'agrafe. La butée 30C est avantageusement avancée le plus possible de façon à rejoindre une face avant 30A de la paroi frontale de renfort 30. Cette face avant 30A est avantageusement plate avec des bords latéraux arrondis, de façon à former une large surface d'appui pour un objet inséré sous l'agrafe jusqu'à cette face, comme par exemple un feuillet.

Dans un deuxième mode de réalisation d'une structure de montage selon l'invention, non représenté sur les figures, il est possible de supprimer la paroi frontale de renfort 30, et de prévoir sur l'organe de butée 20 une partie saillante supérieure analogue à la butée 30C décrite ci-dessus. Il est également possible de supprimer une portion de la paroi longitudinale médiane 40 au dessus de l'orifice d'encliquetage 8, c'est-à-dire de ne plus relier entre eux par cette paroi la partie transversale de renfort 6 et l'organe de butée 20. Ces dispositions prises ensemble ou isolément permettent une petite économie de matière plastique, mais peuvent néanmoins présenter l'inconvénient de fragiliser l'organe récepteur 2.

Il est entendu qu'une structure de montage d'une agrafe pour un instrument d'écriture n'est pas nécessairement prévue pour être disposée à l'arrière de l'instrument d'écriture, et peut par exemple équiper un capuchon de protection d'une pointe à l'avant de l'instrument d'écriture.

Il peut être obtenu un ensemble en matière plastique pour instrument d'écriture, comprenant un organe généralement tubulaire (15) s'étendant selon un axe longitudinal (X) et un organe récepteur (2) faisant saillie sur une portion de paroi (17) dudit organe généralement tubulaire (15), ledit organe récepteur étant destiné à recevoir une agrafe et comprenant deux parois latérales (50, 51) et une paroi supérieure (52) qui relie entre elles lesdites deux parois latérales. L'organe récepteur (2) comprend en outre un orifice de maintien (7) destiné à maintenir fixement une partie de l'agrafe, ledit orifice de maintien étant formé entre lesdites deux parois latérales (50, 51) et entre ladite paroi supérieure (52) et ladite de portion de paroi (17). L'organe récepteur (2) comprend en outre une paroi longitudinale médiane (40) s'étendant selon un plan longitudinal (P1) qui passe par ledit axe longitudinal (X) et un organe de butée (20) qui présente deux parois de butées (20A, 21A) latéralement opposées de part et d'autre de ladite paroi longitudinale médiane (40), et l'organe de butée (20) présente en outre deux parois additionnelles de butée (20B, 21B) sensiblement perpendiculaires à ladite paroi longitudinale médiane (40) de part et d'autre de celle-ci, chaque dite paroi additionnelle de butée (20B, 21B) étant disposée au regard de ladite paroi supérieure (52).

Des modes de réalisation d'un ensemble en matière plastique peuvent avantageusement recourir à l'une ou l'autre des dispositions qui précèdent concernant l'organe récepteur de la structure de montage décrite, éventuellement prises en combinaison.

Grâce aux dispositions de l'ensemble en matière plastique susmentionné, il est possible de mouler l'organe récepteur 2 avec l'organe généralement tubulaire 15 en utilisant deux demi-coquilles symétriques par rapport au plan longitudinal. Le démoulage de l'orifice de maintien 7 et d'un espace creux généralement cylindrique de l'organe tubulaire 15 peuvent s'effectuer en même temps, par exemple à l'aide d'une seule broche que l'on retire vers l'arrière parallèlement à l'axe longitudinal.

Il est entendu que l'organe généralement tubulaire d'un ensemble en matière plastique pour instrument d'écriture n'est pas nécessairement prévu pour être monté à l'arrière d'un fût de l'instrument d'écriture, et peut par exemple consister en un capuchon de protection d'une pointe à l'avant de l'instrument d'écriture.

## Revendications

1. Agrafe (1) pour instrument d'écriture, consistant en une pièce métallique formée à partir d'une tôle métallique, l'agrafe comprenant une partie d'accrochage (1B), un corps principal (1A), et une partie courbée (1C) élastiquement déformable reliant le corps principal (1A) à la partie d'accrochage (1B), ledit corps principal (1A) présentant deux flancs (10, 11) qui comprennent chacun un crochet limiteur de pivotement (10B, 11B),
**caractérisée en ce qu'**elle comprend en outre un organe flexible d'encliquetage (12) formé avec ladite partie d'accrochage (1B), l'organe flexible d'encliquetage étant formé par une languette de ladite tôle métallique qui est découpée dans la partie d'accrochage (1B) pour former une languette d'arrêt, courbée de façon à faire saillie vers le corps principal (1A), et **en ce qu'**au moins lesdits flancs (10, 11) sont formés à partir de ladite tôle métallique et chacun des deux crochets limiteurs de pivotement (10B, 11B) est formé par une languette de ladite tôle métallique recourbée au niveau d'un bord d'un dit flanc (10, 11) pour faire saillie en direction de l'autre crochet limiteur de pivotement.

2. Agrafe (1) selon la revendication 1, dans laquelle ladite tôle métallique présente une épaisseur uniforme.

3. Agrafe (1) selon la revendication 1 ou 2, dans lequel les deux crochets limiteurs de pivotement (10B, 11B) s'étendent selon un même plan, entre la partie d'accrochage (1B) et le corps principal (1A), qui est sensiblement perpendiculaire à une partie plane (10A, 11A) de chaque flanc (10, 11).

4. Structure de montage d'une agrafe (1) pour un instrument d'écriture, comprenant :
(i) une agrafe (1) pivotante constituée par l'agrafe selon l'une quelconque des revendications précédentes, le corps principal (1A) de l'agrafe étant apte à pivoter par rapport à la partie d'accrochage (1B) sans se déformer dans un plan de pivotement (P1), la partie d'accrochage (1B) étant une partie d'accrochage fixe qui s'étend selon un axe de référence (A), le plan de pivotement (P1) contenant ledit axe de référence (A),
(ii) un organe récepteur (2) recevant ladite partie d'accrochage (1B) de l'agrafe (1) dans un état monté de l'agrafe, l'organe récepteur (2) comprenant un organe de butée (20) ayant au moins une butée de pivotement (20B, 21B) apte à coopérer avec un dit crochet limiteur de pivotement (10B, 11B) afin de limiter le pivotement sans déformation dudit corps principal (1A),
et dans laquelle un pivotement dudit corps principal (1A) à l'état monté de l'agrafe (1) entraîne une déformation de ladite partie courbée (1C) qui est élastiquement déformable, ledit organe de butée (20) étant disposé entre les deux flancs (10, 11) du corps principal (1A) de l'agrafe et ayant en outre deux butées latérales (20A, 21A) adaptées pour empêcher un déplacement dudit corps principal (1A) perpendiculairement au plan de pivotement (P1).

5. Structure de montage selon la revendication 4, dans laquelle lesdites deux butées latérales (20A, 21A) sont formées par deux surfaces latérales dudit organe de butée (20) situées de part et d'autre du plan de pivotement (P1), et deux dites butées de pivotement (20B, 21B) sont formées chacune par une surface qui progresse vers le plan de pivotement (P1) depuis un bord d'une dite surface latérale (20A, 21A).

6. Structure de montage selon l'une quelconque des revendications 4 ou 5, dans laquelle ledit organe récepteur (2) comprend une base (5) comprenant deux parois latérales (50, 51) et une paroi supérieure (52) qui relie entre elles lesdites deux parois latérales, ledit organe récepteur (2) comprenant en outre un orifice de maintien (7) formé entre lesdites deux parois latérales (50, 51) et dans lequel ladite partie d'accrochage (1B) de l'agrafe est engagée et immobilisée.

7. Structure de montage selon la revendication 6, dans laquelle ladite paroi supérieure (52) de la base (5) comprend une partie transversale de renfort (6) au niveau d'une entrée dudit orifice de maintien (7), ladite partie transversale de renfort (6) présentant deux faces latérales (60, 61) qui définissent une largeur (L1) inférieure à une largeur (L2) dudit organe de butée (20) et sensiblement égale à une distance (E1) séparant deux dits crochets limiteurs de pivotement (10B, 11B).

8. Structure de montage selon l'une quelconque des revendications 6 et 7, dans laquelle ladite paroi supérieure (52) comprend des bossages (52B) faisant saillie vers l'intérieur de l'orifice de maintien (7), lesdits bossages étant en contact avec une face de la partie d'accrochage (1B) de l'agrafe de façon à empêcher un déplacement de ladite partie d'accrochage selon le plan de pivotement (P1).

9. Structure de montage selon l'une quelconque des revendications 6 à 8, dans laquelle l'organe récepteur (2) comprend un orifice d'encliquetage (8) adjacent audit orifice de maintien (7) et dans lequel ledit organe flexible d'encliquetage (12) de l'agrafe (1) est engagé.

10. Structure de montage selon l'une quelconque des revendications 4 à 9, dans laquelle ledit organe récepteur (2) comprend une paroi frontale de renfort (30) qui s'étend sensiblement perpendiculairement audit axe de référence (A), ladite au moins une butée de pivotement (20B, 21B) faisant saillie à partir d'une face arrière (30B) de ladite paroi frontale de renfort (30).

11. Structure de montage selon la revendication 10, dans laquelle ladite paroi frontale de renfort (30) comprend une partie saillante supérieure (30C) formant une butée contre laquelle une surface inférieure du corps principal (1A) de l'agrafe vient en contact quand l'agrafe n'est pas sollicitée.

12. Structure de montage selon l'une quelconque des revendications 4 à 11, dans laquelle un espacement (D1) est prévu entre chaque crochet limiteur de pivotement (10B, 11B) et une dite butée de pivotement (20B, 21B).

13. Structure de montage selon l'une quelconque des revendications 4 à 12, dans laquelle l'organe récepteur (2) est intégralement formé avec un organe généralement tubulaire (15) du type se montant à l'arrière d'un fût (4) d'un instrument d'écriture, l'organe généralement tubulaire 15 s'étendant selon un axe longitudinal (X), la structure de montage étant symétrique par rapport à un plan longitudinal (P1) qui passe par l'axe longitudinal (X) de l'organe tubulaire (15).

## Patentansprüche

1. Clip (1) für ein Schreibgerät, bestehend aus einem aus einem Metallblech gebildeten Metallteil, wobei der Clip ein Einklinkteil (1B), einen Hauptkörper (1A) und einen elastisch verformbaren, gekrümmten Teil (1C) umfasst, der den Hauptkörper (1A) mit dem Einklinkteil (1B) verbindet, wobei der Hauptkörper (1A) zwei Seiten (10, 11) aufweist, die jeweils einen schwenkbegrenzenden Haken (10B, 11B) umfassen, **dadurch gekennzeichnet, dass** er ferner ein flexibles Einrastelement (12) umfasst, das mit dem Einklinkteil (1B) gebildet ist, wobei das flexible Einrastelement durch eine Lasche des Metallblechs gebildet ist, die in den Einklinkteil (1B) geschnitten ist, um eine Stopperlasche zu bilden, die so gebogen ist, dass sie in Richtung des Hauptkörpers (1A) vorsteht, und dass mindestens die Seiten (10, 11) aus dem Metallblech gebildet sind und jeder der beiden schwenkbegrenzenden Haken (10B, 11B) durch eine Lasche des Metallblechs gebildet ist, die an einer Kante dieser Seite (10, 11) so gebogen ist, dass sie in Richtung des anderen schwenkbegrenzenden Hakens vorsteht.

2. Clip (1) nach Anspruch 1, wobei das Metallblech eine gleichmäßige Dicke aufweist.

3. Clip (1) nach Anspruch 1 oder 2, wobei sich die beiden schwenkbegrenzenden Haken (10B, 11B) entlang derselben Ebene zwischen dem Einklinkteil (1B) und dem Hauptkörper (1A) erstrecken, der im Wesentlichen senkrecht zu einem flachen Teil (10A, 11A) jeder Seite (10, 11) ist.

4. Montagestruktur für einen Clip (1) für ein Schreibgerät, umfassend:
(i) einen Schwenkclip (1), der aus dem Clip nach einem der vorhergehenden Ansprüche besteht, wobei der Hauptkörper (1A) des Clips relativ zu dem Einklinkteil (1B) schwenkbar ist, ohne sich in einer Schwenkebene (P1) zu verformen, wobei der Einklinkteil (1B) ein fester Einklinkteil ist, der sich entlang einer Referenzachse (A) erstreckt, wobei die Schwenkebene (P1) die Bezugsachse (A) enthält,
(ii) ein Aufnahmeelement (2), das den Einklinkteil (1B) des Clips (1) in einem montierten Zustand des Clips aufnimmt, wobei das Aufnahmeelement (2) ein Anschlagelement (20) mit mindestens einem Schwenkanschlag (20B, 21B) aufweist, der mit einem schwenkbegrenzenden Haken (10B, 11B) zusammenarbeiten kann, um das Schwenken ohne Verformung des Hauptkörpers (1A) zu begrenzen, und wobei ein Schwenken des Hauptkörpers (1A) im montierten Zustand des Clips (1) eine Verformung des gekrümmten Teils (1C) verursacht, der elastisch verformbar ist, wobei das Anschlagelement (20) zwischen den beiden Seiten (10, 11) des Hauptkörpers (1A) des Clips angeordnet ist und ferner zwei seitliche Anschläge (20A, 21A) aufweist, die angepasst sind, um eine Verschiebung des Hauptkörpers (1A) senkrecht zur Schwenkebene (P1) zu verhindern.

5. Montagestruktur nach Anspruch 4, wobei die beiden seitlichen Anschläge (20A, 21A) durch zwei Seitenflächen des Anschlagelements (20) gebildet sind, die sich auf jeder Seite der Schwenkebene (P1) befinden, und die zwei Schwenkanschläge (20B, 21B) jeweils durch eine Fläche gebildet sind, die von einer Kante einer Seitenfläche (20A, 21A) zur Schwenkebene (P1) vorrückt.

6. Montagestruktur nach einem der Ansprüche 4 oder 5, wobei das Aufnahmeelement (2) eine Basis (5) umfasst, die zwei Seitenwände (50, 51) und eine obere Wand (52) umfasst, die die beiden Seitenwände miteinander verbindet, wobei das Aufnahmeelement (2) ferner eine Halteöffnung (7) umfasst, die zwischen den beiden Seitenwänden (50, 51) ausgebildet ist und in die der Einklinkteil (1B) des Clips eingreift und immobilisiert wird.

7. Montagestruktur nach Anspruch 6, wobei die obere Wand (52) der Basis (5) einen Querverstärkungsabschnitt (6) auf der Höhe eines Einlasses der Halteöffnung (7) umfasst, wobei der Querverstärkungsabschnitt (6) zwei Seitenflächen (60, 61) aufweist, die eine Breite (L1) definieren, die kleiner als eine Breite (L2) des Anschlagelements (20) ist und im Wesentlichen gleich einem Abstand (E1) zwischen zwei der schwenkbegrenzenden Haken (10B, 11B) ist.

8. Montagestruktur nach einem der Ansprüche 6 und 7, wobei die obere Wand (52) Erhebungen (52B) umfasst, die von der Halteöffnung (7) nach innen vorstehen, wobei die Erhebungen in Kontakt mit einer Seite des Einklinkteils (1B) des Clips stehen, um eine Verschiebung des Einklinkteils entlang der Schwenkebene (P1) zu verhindern.

9. Montagestruktur nach einem der Ansprüche 6 bis 8, wobei das Aufnahmeelement (2) eine Einrastöffnung (8) neben der Halteöffnung (7) umfasst und mit der das flexible Einrastelement (12) des Clips (1) im Eingriff steht.

10. Montagestruktur nach einem der Ansprüche 4 bis 9, wobei das Aufnahmeelement (2) eine vordere Verstärkungswand (30) umfasst, die sich im Wesentlichen senkrecht zu der Referenzachse (A) erstreckt, wobei der mindestens eine Schwenkanschlag (20B, 21B) von einer Rückseite (30B) der vorderen Verstärkungswand (30) vorsteht.

11. Montagestruktur nach Anspruch 10, wobei die vordere Verstärkungswand (30) einen oberen Vorsprungsteil (30C) umfasst, der einen Anschlag bildet, gegen den eine untere Oberfläche des Hauptkörpers (1A) des Clips in Kontakt kommt, wenn der Clip nicht belastet wird.

12. Montagestruktur nach einem der Ansprüche 4 bis 11, wobei ein Spalt (D1) zwischen jedem schwenkbegrenzenden Haken (10B, 11B) und einem Schwenkanschlag (20B, 21B) vorgesehen ist.

13. Montagestruktur nach einem der Ansprüche 4 bis 12, wobei das Aufnahmeelement (2) einstückig mit einem allgemein rohrförmigen Element (15) des Typs gebildet ist, der an der Rückseite eines Zylinders (4) eines Schreibgeräts montiert wird, wobei sich das allgemein röhrenförmige Element 15 entlang einer Längsachse (X) erstreckt, wobei die Montagestruktur in Bezug auf eine Längsebene (P1) symmetrisch ist, die durch die Längsachse (X) des röhrenförmigen Elements (15) verläuft.

## Claims

1. Clip (1) for a writing instrument, consisting of a metal piece formed from a metal sheet, the clip comprising a hooking part (1B), a main body (1A), and an elastically deformable curved part (1C) which connects the main body (1A) to the hooking part (1B), said main body (1A) having two flanks (10, 11) which each comprise a pivot limiting hook (10B, 11B), **characterized in that** it further comprises a flexible snap-fitting member (12) formed with said hooking part (1B), the flexible snap-fitting member being formed by a tab of said metal sheet which is cut in the hooking part (1B) to form a stop tab, and which is curved so as to protrude toward the main body (1A), and **in that** at least said flanks (10, 11) are formed from said metal sheet and each of the two pivot limiting hooks (10B, 11B) is formed by a tab of said metal sheet which is curved at an edge of one such flank (10, 11) so as to protrude in the direction of the other pivot limiting hook.

2. Clip (1) according to claim 1, wherein said metal sheet has a uniform thickness.

3. Clip (1) according to either claim 1 or claim 2, wherein the two pivot limiting hooks (10B, 11B) extend in the same plane, between the hooking part (1B) and the main body (1A), which is substantially perpendicular to a flat part (10A, 11A) of each flank (10, 11).

4. Structure for mounting a clip (1) for a writing instrument, comprising:
(i) a pivoting clip (1) consisting of the clip according to any of the preceding claims, the main body (1A) of the clip being able to pivot relative to the hooking part (1B) without deforming in a pivot plane (P1), the hooking part (1B) being a fixed hooking part which extends along a reference axis (A), the pivot plane (P1) containing said reference axis (A),
(ii) a receiving member (2) receiving said hooking part (1B) of the clip (1) in a mounted state of the clip, the receiving member (2) comprising a stop member (20) having at least one pivot stop (20B, 21B) which is able to cooperate with one such pivot limiting hook (10B, 11B) in order to limit the pivoting without deformation of said main body (1A),
and wherein said main body (1A) pivoting in the mounted state of the clip (1) causes a deformation of said curved part (1C) which is elastically deformable, said stop member (20) being arranged between the two flanks (10, 11) of the main body (1A) of the clip and further having two lateral stops (20A, 21A) suitable for preventing a displacement of said main body (1A) perpendicularly to the pivot plane (P1).

5. Mounting structure according to claim 4, wherein said two lateral stops (20A, 21A) are formed by two lateral surfaces of said stop member (20) that are located on either side of the pivot plane (P1), and two such pivot stops (20B, 21B) are each formed by a surface which progresses toward the pivot plane (P1) from an edge of one such lateral surface (20A, 21A).

6. Mounting structure according to either claim 4 or claim 5, wherein said receiving member (2) comprises a base (5) comprising two lateral walls (50, 51) and an upper wall (52) which interconnects said two lateral walls, said receiving member (2) further comprising a retaining opening (7) which is formed between said two lateral walls (50, 51) and in which said hooking part (1B) of the clip is engaged and secured in place.

7. Mounting structure according to claim 6, wherein said upper wall (52) of the base (5) comprises a transverse reinforcing part (6) at an inlet of said retaining opening (7), said transverse reinforcing part (6) having two lateral faces (60, 61) which define a width (L1) less than a width (L2) of said stop member (20) and substantially equal to a distance (E1) separating said two pivot limiting hooks (10B, 11B).

8. Mounting structure according to either claim 6 or claim 7, wherein said upper wall (52) comprises embossments (52B) protruding toward the interior of the retaining opening (7), said embossments being in contact with a face of the hooking part (1B) of the clip so as to prevent a displacement of said hooking part in the pivot plane (P1).

9. Mounting structure according to any of claims 6 to 8, wherein the receiving member (2) comprises a snap-fitting opening (8) which is adjacent to said retaining opening (7) and in which said flexible snap-fitting member (12) of the clip (1) is engaged.

10. Mounting structure according to any of claims 4 to 9, wherein said receiving member (2) comprises a front reinforcing wall (30) which extends substantially perpendicularly to said reference axis (A), said at least one pivot stop (20B, 21B) protruding from a rear face (30B) of said front reinforcing wall (30).

11. Mounting structure according to claim 10, wherein said front reinforcing wall (30) comprises an upper protruding part (30C) forming a stop which a lower surface of the main body (1A) of the clip contacts when the clip is not biased.

12. Mounting structure according to any of claims 4 to 11, wherein a gap (D1) is provided between each pivot limiting hook (10B, 11B) and one such pivot stop (20B, 21B).

13. Mounting structure according to any of claims 4 to 12, wherein the receiving member (2) is integrally formed with a generally tubular member (15) of the type to be mounted at the rear of a barrel (4) of a writing instrument, the generally tubular member 15 extending along a longitudinal axis (X), the mounting structure being symmetrical with respect to a longitudinal plane (P1) which passes through the longitudinal axis (X) of the tubular member (15).
